# EUROPEAN PATENT APPLICATION

(11) **EP 4 776 723 A1**
(43) Date of publication of application: **15.07.2026**
(21) Application number: 23951433.4
(22) Date of filing: 04.09.2023
(51) Int. Cl.: H04W 72/1273, H04W 72/23

(54) **TERMINAL AND COMMUNICATION METHOD**

(71) Applicant: NTT DOCOMO, INC., Tokyo 100-6150 (JP)
(72) Inventor: SHIBAIKE, Naoya, Tokyo 100-6150 (JP); NAGATA, Satoshi, Tokyo 100-6150 (JP); WANG, Jing, Beijing, 100190 (CN); PI, Qiping, Beijing, 100190 (CN); LIU, Wenjia, Beijing, 100190 (CN); HOU, Xiaolin, Beijing, 100190 (CN); CHEN, Lan, Beijing, 100190 (CN)
(74) Representative: Hoffmann Eitle
(86) International application number: PCT/JP2023/032290
(87) International publication number: WO 2025/052529

(57) **Abstract**

A terminal includes: a reception unit configured to receive, from a base station, information indicating whether a first waveform applied to a channel or a signal is enabled or disabled; and a control unit configured to apply the first waveform when receiving the channel or the signal from the base station in a case where the information indicates that the first waveform is enabled.

## Description

### TECHNICAL FIELD

The present invention relates to a terminal and a communication method in a wireless communication system.

### BACKGROUND ART

In 3GPP (registered trademark) (3rd Generation Partnership Project), in order to realize even larger system capacity, even faster data transmission speed, even lower latency in a wireless communication section, etc., a wireless communication method called "5G" or "NR (New Radio)" is being discussed (hereinafter, the wireless communication method is referred to as "NR"). In 5G, various wireless technologies and network architectures are being discussed to satisfy the requirements of a radio link delay of 1 ms or less while achieving throughput of 10 Gbps or more (e.g., Non-Patent Document 1 and Non-Patent Document 2).

In addition, various requirements for the next generation "6G" are being discussed. For example, the requirements include the ultra broadband communication, the mission critical communication, the ultra massive connection, the universal coverage, the intelligent connection, the ubiquitous sensing, and the like.

In order to satisfy the above-described requirements, as a new concept, the goals are set to be extensible (for example, capable of being effectively used in the future), easy-operational, customizable (for example, capable of being easily operational), and sustainable (for example, capable of reducing cost, capable of having a robust structure, capable of having resilience). In addition, as guaranteed communication, always guaranteeing the minimum performance is being discussed.

### CITATION LIST

### Non-Patent Literature

Non-Patent Literature 1: 3GPP TS 38.300 V17.5.0 (2023-06)
Non-Patent Literature 2: 3GPP TS 38.401 V17.5.0 (2023-06)
Non-Patent Literature 3: 3GPP TS 38.331 V17.5.0 (2023-06)
Non-Patent Literature 4: 3GPP TS 38.214 V17.6.0 (2023-06)

### SUMMARY OF INVENTION

### TECHNICAL PROBLEM

For example, in order to satisfy the low PAPR (Peak-to-average power ratio) requirements in which NTN (Non-Terrestrial Network) and sub-terahertz band are expected to be used, an introduction of a new waveform for the downlink is being discussed. Accordingly, how to support the new waveform needs to be specified.

In view of the above-described points, the present invention has been made to determine waveforms to be applied in the wireless communication system.

### SOLUTION TO PROBLEM

According to the disclosed technique, a terminal is provided. The terminal includes: a reception unit configured to receive, from a base station, information indicating whether a first waveform applied to a channel or a signal is enabled or disabled; and a control unit configured to apply the first waveform when receiving the channel or the signal from the base station in a case where the information indicates that the first waveform is enabled.

### ADVANTAGEOUS EFFECTS OF INVENTION

According to the disclosed technique, a waveform to be applied can be determined in a wireless communication system.

### BRIEF DESCRIPTION OF DRAWINGS

[Fig. 1] is a drawing illustrating a configuration example of a wireless communication system in an embodiment of the present invention.
[Fig. 2] is a flowchart for describing an example (1) of a configuration related to waveforms in an embodiment of the present invention.
[Fig. 3] is a flowchart for describing an example (2) of a configuration related to waveforms in an embodiment of the present invention.
[Fig. 4] is a flowchart for describing an example (3) of a configuration related to waveforms in an embodiment of the present invention.
[Fig. 5] is a flowchart for describing an example (4) of a configuration related to waveforms in an embodiment of the present invention.
[Fig. 6] is a drawing illustrating an example of a functional structure of a base station 10 in an embodiment of the present invention.
[Fig. 7] is a drawing illustrating an example of a functional configuration of a terminal 20 in an embodiment of the present invention.
[Fig. 8] is a drawing illustrating an example of a hardware structure of the base station 10 or the terminal 20 in an embodiment of the present invention.
[Fig. 9] is a drawing illustrating an example of a structure of a vehicle 2001 in an embodiment of the present invention.

### DESCRIPTION OF EMBODIMENTS

In the following, while referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. It should be noted that, although the conventional techniques may be the conventional LTE, the conventional techniques are not limited to the conventional LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. In addition, the above-described terms in NR correspond to NR-SS, NR-PSS, NR-SSS, NR-PBCH, NR-PRACH, etc. However, even when a signal is used for NR, the signal is not required to be referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression that a radio parameter, or the like is "configured" may mean that a predetermined value is pre-configured, or may mean that a radio parameter indicated by a base station 10 or a terminal 20 is configured.

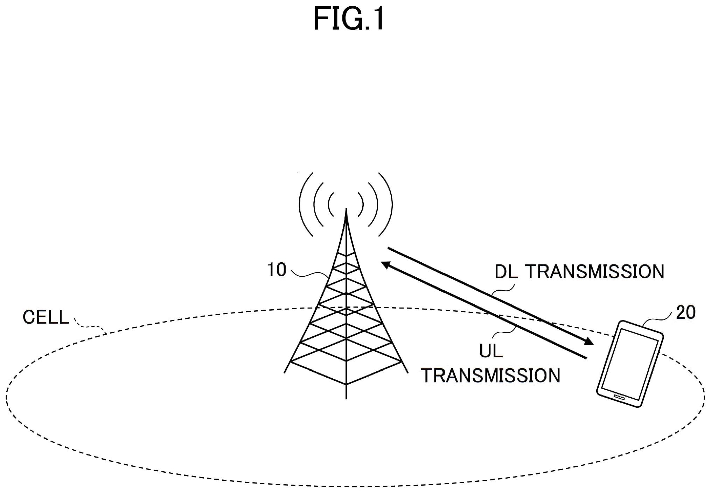

Fig. 1 is a drawing illustrating a configuration example of a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. The base station 10 transmits a synchronization signal and system information to the terminal 20. The synchronization signal is, for example, an NR-PSS and/or an NR-SSS. The system information may be transmitted via an NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in Fig. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals.

In addition, various requirements for the next generation "6G" are being discussed. For example, the requirements include the ultra broadband communication, the mission critical communication, the ultra massive connection, the universal coverage, the intelligent connection, the ubiquitous sensing, and the like.

In order to satisfy the above-described requirements, as a new concept, the goals are set to be extensible (for example, capable of being effectively used in the future), easy-operational, customizable (for example, capable of being easily operational), and sustainable (for example, capable of reducing cost, capable of having a robust structure, capable of having resilience). In addition, as guaranteed communication, always guaranteeing the minimum performance is being discussed.

In NR, both CP-OFDM (Cyclic Prefix OFDM) and DFT-s-OFDM (Discrete Fourier Transform - Spread OFDM) are supported for the UL waveform. The default waveform for UL is CP-OFDM, and a higher layer parameter indicating whether the transform precoder is enabled or disable can be configured for Msg3, PUSCH, CG, MsgA, and DMRS for PUCCH for PUCCH formats 3 and 4.

For example, msg3-transformPrecoder can be configured by RACH-ConfigCommon (refer to Non-Patent Literature 3). In a case where msg3-transformPrecoder is not configured, the UE disables the transform precoder.

For example, transformPrecoder can be configured by PUSCH-Config (refer to Non-Patent Literature 3). In a case where transformPrecoder is not configured, the UE applies the value of msg3-transformPrecoder in rach-ConfigCommon included in the BWP configuration.

For example, transformPrecoder can be configured by ConfiguredGrantConfig (refer to Non-Patent Literature 3).

For example, msgA-TransformPrecoder-r16 can be configured by MsgA-PUSCH-Config-r16 (refer to Non-Patent Literature 3).

For example, dmrs-UplinkTransformPrecodingPUCCH can be configured by PUCCH-Config (refer to Non-Patent Literature 3). The above-described configuration is used for DMRS for PUCCH formats 3 and 4.

In order to support two waveforms for UL, there are two configurations described in the following 1) and 2) for supporting configurations and parameters for two waveforms (refer to Non-Patent Literature 3).
1) DMRS-UplinkConfig
2) PTRS-UplinkConfig

In addition, an operation of dynamically switching the two waveforms for DG (Dynamic grant) - PUSCH according to an indication of DCI format 0_1 or 0_2. The dynamic waveform switching is separately configured for each BWP in PUSCH-Config.

The transform precoder at the time of PUSCH transmission is configured to be enabled or disabled by msg3-transformPrecoder, msgA-TransformPrecoder, transformPrecoder in pusch-Config, or transformPrecoder in configuredGrantConfig (refer to Non-Patent Literature 4).

Here, for example, in order to satisfy the low PAPR (Peak-to-average power ratio) requirements in which NTN (Non-Terrestrial Network) and sub-terahertz band are expected to be used, an introduction of a new waveform for the downlink is being discussed. For example, the enhanced waveforms may be supported for NR or 6G DL based on DFT-s-OFDM, DFT-s-OFDM, DFT-s-OTFS (Orthogonal Time Frequency Space), SC-FDE (Single-Carrier Frequency Domain Equalization), or the like.

New waveforms may be introduced for the conventional NR DL channel or signal as described below. New waveforms may be introduced for PDCCH or CSI-RS. In addition, new waveforms may be introduced for SSB, PSS, SSS, or PBCH. New waveforms may be separately applied for PSS, SSS, and PBCH. For example, DFT-s-OFDM may be applied for PBCH and/or DMRS for PBCH.

In addition, new waveforms may be introduced for PDSCH, DL-DMRS for PDSCH, or DL-PTRS. It is to be noted that, in UL, DFT-s-OFDM can be applied for DG-PUSCH, UL-DMRS for PUSCH, UL-DMRS for PUCCH, or UL-PTRS.

As described above, how to support different DL waveforms may be determined for NR or 6G. Which DL channel or reference signal is to support different DL waveforms may be determined. Whether or not to support the semi-static or dynamic DL waveform switching may be determined. In order to support a plurality of DL waveforms, enhancement of other configurations or technical specifications may be introduced.

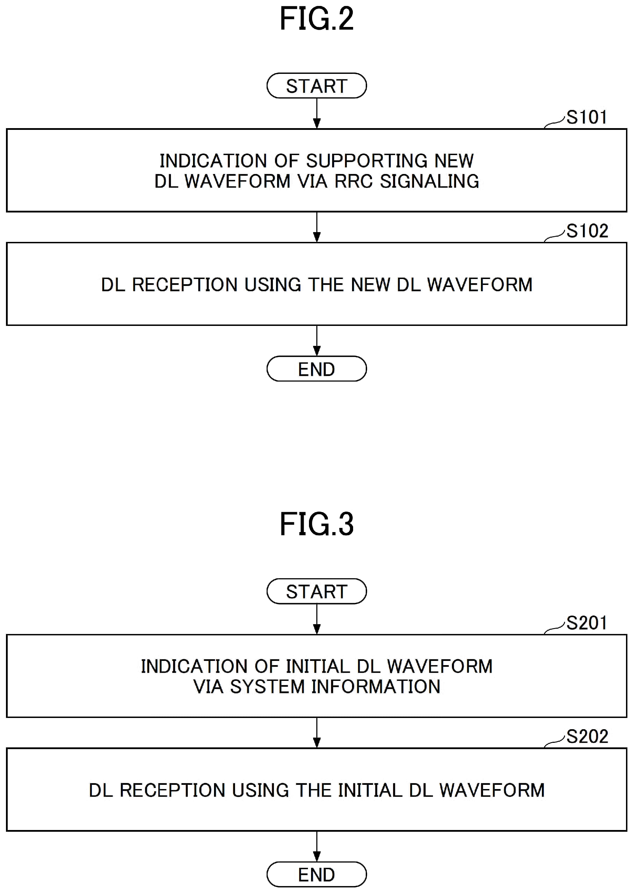

Fig. 2 is a flowchart for describing an example (1) of a configuration related to waveforms in an embodiment of the present invention. In step S101, the terminal 20 receives an indication of supporting a new DL waveform via RRC signaling. In step S102, the terminal 20 performs DL reception by using the new DL waveform.

CP-OFDM may be a default DL waveform. It may be defined in advance in the technical specification that CP-OFDM is a default DL waveform.

Supporting of the new waveforms such as DFT-s-OFDM, enhanced DFT-s-OFDM, DFT-s-OTFS, SC-FDE, and the like may be indicated by a new RRC parameter. Whether the new waveforms are enabled or disabled may be configured by the new RRC parameter. In order to indicate a new waveform applied for different granularity or for different channels or reference signals, the new RRC parameter may be configured by a different RRC information element. For example, the RRC parameter as described in the following 1) to 8) may be defined (refer to Non-Patent Literature 3).
1) New RRC parameter included in ServingCellConfig. With the above-described RRC parameter, the UE specific waveforms for all or a part of predefined DL channels or reference signals for all BWPs in the serving cell may be indicated.
2) New RRC parameter included in BWP-DownlinkDedicated. With the above-described RRC parameter, the UE-specific waveforms for all or a part of predefined DL channels or reference signals for the BWP may be indicated. The DL channels or reference signals may be PDSCH, or may be DMRS for PDSCH.
3) New RRC parameter included in PDCCH-Config, PDCCH-ConfigCommon, and/or PDCCH-ConfigSIB1. With the above-described RRC parameter, the UE specific waveforms for PDCCH for each cell or for each BWP may be indicated. The waveforms may be configured for or applied to a certain CORESET and SS configuration and/or a certain DCI format.
4) New RRC parameter included in PDSCH-Config, PDSCH-ServingCellConfig, and/or PDSCH-ConfigCommon. With the above-described RRC parameter, the UE specific waveforms for PDSCH for each cell or for each BWP may be indicated. The waveforms may be configured for or applied to PDSCH scheduled by a certain DCI format (for example, 1_1, 1_2) or by DG or SPS.
5) New RRC parameter included in CSI-ResourceConfig. With the above-described RRC parameter, the UE specific waveforms for CSI-RS for each cell or for each BWP may be indicated. The waveforms may be configured for or applied to P, SP, or AP CSI-RS, and/or CSI-RS for different purposes such as mobility, BM, CSI, and/or TRS.
6) New RRC parameter included in NR-DL-PRS-PDC-Info, NR-DL-PRS-Info, NR-DL-PRS-ResourceSet, and/or NR-DL-PRS-Resource (for PRS).
7) New RRC parameter included in DMRS-DownlinkConfig. The waveforms according to the RRC parameter may be configured or applied for DMRS for PDSCH and/or PDCCH for each cell or for each BWP, or may be configured for or applied to different DMRS types or configurations.
8) New RRC parameter included in PTRS-Downlink (for PTRS).

The above-described new RRC parameter may be configured or indicated with finer granularity. For example, the above-described new RRC parameter may be configured or indicated for Msg2 RAR PDSCH via RACH-Config and/or RACH-ConfigCommon, may be configured or indicated for Msg4/B PDSCH, may be configured or indicated for PDSCH scheduled by DCI format 1_1/1_0/1_2, or may be configured or indicated for SPS configuration via SPS-Config.

For example, in a case where the field "additionalWaveformDL" is not configured, the terminal 20 may apply CP-OFDM as a default waveform.

For example, in order to indicate a DL waveform for different granularities or for different channels/reference signals, a new MAC-CE and/or DCI (specific DCI format) may be used for an indication of updating or switching the DL waveform for a specific DL channel or RS. The above-described indication, switching, or updating of the waveform based on the MAC-CE and/or DCI may be enabled by an RRC configuration, or may be always supported. For example, the terminal 20 may expect that the DL waveform is always indicated by PDSCH scheduling DCI.

Different DL waveforms may be supported for different FRs. For example, different DL waveforms may be supported for FR1, FR2-1, FR2-2, FR3, sub-THz, THz, NTN scenario, NTN IoT scenario, or the like.

The pre-defined DL channels or RSs for which the new DL waveform is applied may include PDSCH, DL-DMRS for PDSCH, or DL-PTRS.

Fig. 3 is a flowchart for describing an example (2) of a configuration related to waveforms in an embodiment of the present invention. In step S201, the initial DL waveform is indicated via system information. In step S202, the terminal 20 receives DL by using the initial DL waveform.

A plurality of waveforms may be defined for DL in the technical specification. The initial DL waveform may be explicitly or implicitly indicated via PBCH (MIB) and/or SIB. The initial DL waveform may be one of the plurality of waveforms defined in the technical specification. The terminal 20 may determine the initial DL waveform for certain pre-defined DL channels and/or RSs including the initial DL waveform for the cell or for the initial BWP, based on the decoded MIB or SIB. The initial DL waveform may be one of CP-OFDM, DFT-s-OFDM, enhanced DFT-s-OFDM, DFT-s-OTFS, or SC-FDE, for example.

In a case where there is no indication via MIB or SIB, the terminal 20 may apply the default waveform. For example, one of CP-OFDM, DFT-s-OFDM, enhanced DFT-s-OFDM, DFT-s-OTFS, or SC-FDE may be predefined as the default waveform.

The above-described explicit indication may be indicated by a new field included in MIB, or may be indicated by a new parameter included in SIB.

The above-described implicit indication may mean that another indication or another parameter related to a scenario or a frequency included in MIB or SIB implies the DL waveform to be applied. For example, a certain NTN scenario or THz scenario may imply that DFT-s-OFDM is to be used as the DL waveform.

The terminal 20 may expect to use the indicated DL waveform for all of or a part of the pre-defined DL channels and/or RSs until the new RRC signaling, MAC-CE, and/or DCI for updating or switching the DL waveform for certain DL channels and/or RSs is received.

The pre-defined DL channels or RSs for which the new DL waveform is applied may include PDSCH, DL-DMRS for PDSCH, or DL-PTRS.

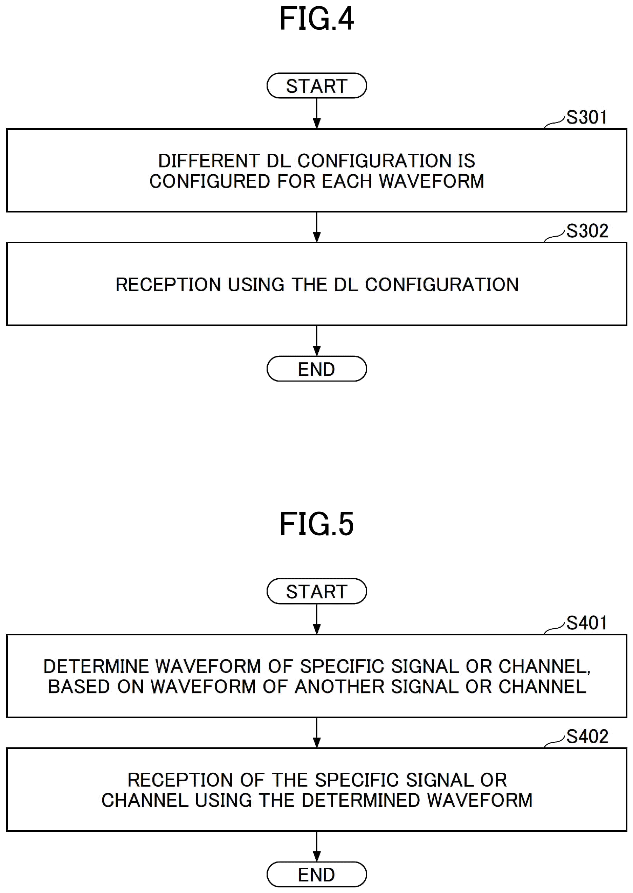

Fig. 4 is a flowchart for describing an example (3) of a configuration related to waveforms in an embodiment of the present invention. In step S301, the DL configurations different for different waveforms are configured. In step S302, the terminal 20 performs reception by using the DL configurations.

In a specific DL configuration (for example, DMRS-DownlinkConfig, PTRS-DownlinkConfig, CSI-ResourceConfig, or the like), two or more configurations or parameters may be configured for different waveforms. The configurations or parameters may be, for example, the scrambling ID, the sequence configuration, the hopping configuration, the RS pattern, the RS port, the RS density, the RS type, the power, and the like, and may be separately configured for different waveforms.

Different DMRS types and/or PTRS types may be introduced for different DL waveforms, may be pre-defined, may be configured, or may be supported. For example, the DMRS type 2 is not required to support DFT-s-OFDM.

Different MCS (Modulation and Coding Scheme) tables may be introduced, may be pre-defined, or may be configured for PDSCH with different DL waveforms are applied. In addition, different MCS tables may be introduced, pre-defined, or configured for PDSCH scheduled by different DCI formats (for example, DCI format 1_1/1_2) to which two different waveforms are applied.

Different modulation schemes may be introduced, pre-defined, or configured for different DL waveforms that are for different DL channels and/or RSs. For example, π/2-BPSK may be supported only for DFT-s-OFDM.

Different DL codebooks and DL antenna port indication tables may be introduced, pre-defined, or configured for different DL waveforms. The number of supported maximum ranks for PDSCH or SPS with different waveforms may be different. For example, the maximum number of ranks 8 for CP-OFDM and the maximum number of ranks 1 or 2 for DFT-s-OFDM may be supported, separately pre-defined, or configured. Furthermore, the codebook design and the antenna port indication may be different.

Different frequency resource allocation types for different DL waveforms for different DL channels and/or RSs may be introduced, pre-defined, configured, or supported. For example, FDRA type 0 is not required to be supported for DFT-s-OFDM.

It is to be noted that, with respect to DFT-s-OFDM for DL-PDSCH, DL-DMRS, or DL-PTRS, the corresponding sequence generation, mapping to physical resources, and layer mapping may be defined in the technical specification. With respect to DFT-s-OFDM for DL-PDSCH, DL-DMRS, or DL-PTRS, the sequence generation, the mapping to physical resources, and the layer mapping for UL-PUSCH, UL-DMRS, UL-PTRS, or UL-PUCCH may be reused for DL.

Fig. 5 is a flowchart for describing an example (4) of a configuration related to waveforms in an embodiment of the present invention. In step S401, the terminal 20 determines the waveform for a specific signal or channel, based on the waveform for another signal or channel. In step S402, the terminal 20 receives the specific signal or channel by using the determined waveform.

The waveform for a specific signal and/or channel (hereinafter, referred to as "signal/channel#A") may be determined at least based on that for another signal and/or channel (hereinafter, referred to as "signal/channel#B"). The combination between the signal/channel#A and the signal/channel#B may be one of the following 1) to 7). It is to be noted that the signal/channel#A may be any one of the first half or the second half of the combination and the signal/channel#B may be any one of the first half or the second half of the combination. In other words, the first half and the second half of the combination may be exchangeable.
1) PDCCH and PDSCH
2) PDCCH and PUCCH
3) PDCCH and PUSCH
4) PDSCH and PUCCH
5) PDSCH and PUSCH
6) SSB and PDCCH or PDSCH
7) CSI-RS and PDCCH or PDSCH

The waveform for the signal/channel#A may be determined according to at least one of the following 1) or 2).
1) In a case where the waveform for the signal/channel#A is a specific waveform (for example, DFT-s-OFDM), the same waveform is applied to one signal/channel#B among the plurality thereof without signaling.
2) In a case where the waveform for the signal/channel#A is a specific waveform (for example, CP-OFDM), a certain waveform is applied to one signal/channel#B among the plurality thereof based on a configuration.
3) In a case where the waveform for the signal/channel#B is a specific waveform (for example, DFT-s-OFDM), the same waveform is applied to the signal/channel#A without signaling.
4) In a case where the waveform for the signal/channel#B is a specific waveform (for example, CP-OFDM), a certain waveform is applied to the signal/channel#A based on a configuration.

At least one of the following 1) or 2) may be applied to the signal/channel#A and/or the signal/channel#B.
1) Transmitted in DL. For example, the signal/channel#B or the signal/channel#A.
2) Transmitted in UL. For example, the signal/channel#A or the signal/channel#B.

For example, the waveform may be determined as described in the following 1) to 3).
1) In a case where DFT-s-OFDM is applied for the DL signal/channel (for example, PDSCH), DFT-s-OFDM may be applied for the UL signal/channel (for example, PUSCH).
2) In a case where DFT-s-OFDM is applied for the DL signal/channel (for example, PDCCH), DFT-s-OFDM may be applied for another DL signal/channel (for example, PDSCH). It is to be noted that the another DL signal/channel may be limited to a DL signal/channel scheduled by the DL signal/channel. For example, DFT-s-OFDM may be applied for a DL signal/channel by limiting the DL signal/channel to PDSCH scheduled by PDCCH for which DFT-s-OFDM is applied.
3) In a case where CP-OFDM is applied for the DL signal/channel (for example, PDSCH), the waveform for the UL signal/channel (for example, PUSCH) may be configurable. As described in the above-described operation, the waveform may be configurable for the UL signal/channel.

With respect to the determination or the limitation of another available waveform, the terminal 20 may assume the same waveform for or may not assume different waveform for the channel or RS that needs to be received or transmitted in the same time domain having or not having an overlap in the frequency domain.

In a case where a different waveform is applied for a certain channel or RS that needs to be received or transmitted in the same time domain having or not having an overlap in the frequency domain, the terminal 20 may determine to receive or transmit a channel or RS based on the priority that is determined based on a combination of the legacy rule and the legacy waveform.

As described below, the new UE capability and the report signaling for the following 1) to 6) may be defined for each UE, for each FR, for each FC, etc.
1) Whether or not to support a new DL waveform for a specific channel or RS. For example, the new DL waveform may be DFT-s-OFDM, enhanced DFT-s-OFDM, DFT-s-OTFS, or SC-FDE. Different UE capabilities may be defined for different channels or RSs. The different UE capability with higher granularity may be defined for a certain channel or RS. For example, the different UE capability may be defined for the different RS type, the different UE capability may be defined for DG-PDSCH or SPS-PDSCH, or the different UE capability may be defined for PDSCH scheduled by a different DCI format.
2) Whether or not to support MAC-CE and/or DCI for updating the DL waveform for a specific channel or RS.
3) Whether or not to support a plurality of DL waveforms and to support using one of the DL waveforms as an initial DL waveform.
4) Whether new MAC tables or supported MAC tables are supported for PDSCH and/or SPS to which new waveforms are applied, the PDSCH being scheduled by different DCI formats.
5) Whether new modulation methods for new waveforms are supported.
6) Whether or not to support the maximum rank for PDSCH and/or SPS to which new waveforms are applied, the PDSCH being scheduled by different DCI formats.

It is to be noted that one or a plurality of the above-described 1) to 6) may be supported by the UE as a mandatory capability. For example, the UE capabilities supported by the UE as a mandatory capability is not required to be reported.

According to an embodiment of the present invention, the terminal 20 can apply appropriate waveforms to the physical channel or signal depending on the communication environment.

In other words, waveforms to be applied can be determined in the wireless communication system.

### (Device configuration)

Next, a functional configuration example of the base station 10 and the terminal 20 for performing the processes and operations described above will be described. The base station 10 and the terminal 20 include functions for implementing the embodiments described above. It should be noted, however, that each of the base stations 10 and the terminal 20 may include only some of the functions in an embodiment.

### <Base station 10>

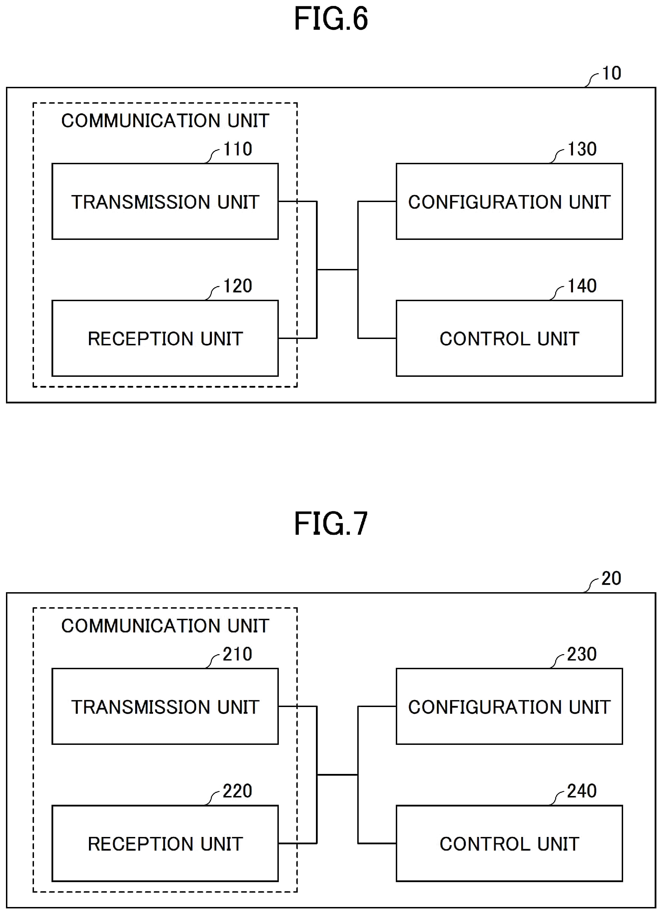

Fig. 6 is a drawing illustrating an example of a functional structure of a base station 10 according to an embodiment of the present invention. As shown in Fig. 6, the base station 10 includes a transmission unit 110, a reception unit 120, a configuration unit 130, and a control unit 140. The functional configuration illustrated in Fig. 6 is merely an example. Functional divisions and names of functional units may be anything as long as operations according to an embodiment of the present invention can be performed.

The transmission unit 110 includes a function for generating a signal to be transmitted to the terminal 20 side and transmitting the signal wirelessly. Further, the transmission unit 110 transmits an inter-network-node message to another network node. The reception unit 120 includes a function for receiving various signals transmitted from the terminal 20 and acquiring, for example, information of a higher layer from the received signals. In addition, the transmission unit 110 has a function of transmitting NR-PSS, NR-SSS, NR-PBCH, DL/UL control signals, and the like to the terminal 20. Further, the reception unit 120 receives an inter-network-node message from another network node.

The configuration unit 130 stores preset information and various configuration information items to be transmitted to the terminal 20. Contents of the configuration information are, for example, information related to the configuration of the encoding method.

The control unit 140 performs control related to the configuration of the encoding method as described in an embodiment of the present invention. In addition, the control unit 140 performs scheduling. The functional units related to signal transmission in the control unit 140 may be included in the transmission unit 110, and the functional units related to signal reception in the control unit 140 may be included in the reception unit 120.

### <Terminal 20>

Fig. 7 is a drawing illustrating an example of a functional structure of a terminal 20 according to an embodiment of the present invention. As shown in Fig. 7, the terminal 20 includes a transmission unit 210, a reception unit 220, a configuration unit 230, and a control unit 240. The functional configuration illustrated in Fig. 7 is merely an example. Functional divisions and names of functional units may be anything as long as operations according to an embodiment of the present invention can be performed.

The transmission unit 210 generates a transmission signal from transmission data and transmits the transmission signal wirelessly. The reception unit 220 receives various signals wirelessly and obtains higher layer signals from the received physical layer signals. In addition, the reception unit 220 has a function of receiving NR-PSS, NR-SSS, NR-PBCH, DL/UL/SL control signals, and the like, transmitted from the base station 10. In addition, for example, with respect to the D2D communications, the transmission unit 210 transmits, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 220 receives, from the another terminal 20, PSCCH, PSSCH, PSDCH, PSBCH, etc.

The configuration unit 230 stores various configuration information items received by the reception unit 220 from the base station 10. In addition, the configuration unit 230 also stores pre-configured configuration information. Contents of the configuration information are, for example, information related to the configuration of the encoding method.

The control unit 240 performs control related to the configuration of the encoding method as described in an embodiment of the present invention. The functional units related to signal transmission in the control unit 240 may be included in the transmission unit 210, and the functional units related to signal reception in the control unit 240 may be included in the reception unit 220.

### (Hardware structure)

The block diagrams that have been used to describe the above embodiments (Fig. 6 and Fig. 7) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, the functional block (component) to implement a function of transmission may be referred to as a transmitting unit or a transmitter. The method for implementing each component is not particularly limited as described above.

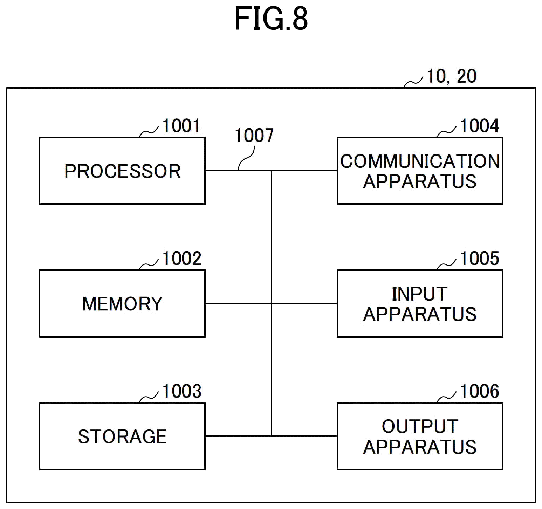

For example, the base station 10, the terminal 20, etc., according to an embodiment of the present disclosure may function as a computer for processing the radio communication method of the present disclosure. Fig. 8 is a diagram to show an example of a hardware structure of the base station 10 and the terminal 20 according to one embodiment. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 6 may be implemented by control programs that are stored in the memory 1002 and that operate on the processor 1001. In addition, for example, the control unit 240 of the terminal 20 illustrated in Fig. 7 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magnetooptical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that outputs something to the outside (for example, a display, a speaker, an LED lamp). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

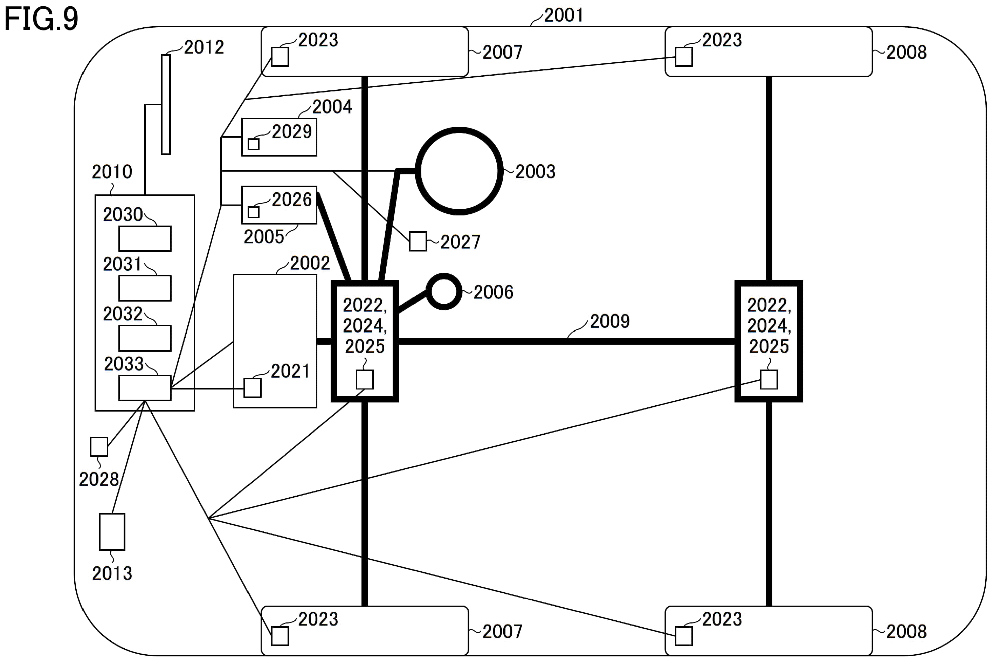

Fig. 9 shows an example of a configuration of a vehicle 2001. As shown in Fig. 9, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 that senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 can communicate with the microprocessor 2031 and components of the vehicle 2001 via a communication port. For example, the communication module 2013 transmits and receives data via a communication port 2033, to and from a drive unit 2002, a steering unit 2003, an accelerator pedal 2004, a brake pedal 2005, a shift lever 2006, front wheels 2007, rear wheels 2008, an axle 2009, a microprocessor 2031 and a memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, and information based on an input from the outside (a user) obtained via the information service unit 2012, to the external apparatus via radio communication. The electronic control unit 2010, the various sensors 2021 to 2028, the information service unit 2012, and the like may be referred to as input units that receive input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display, a speaker, or the like, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Embodiment summary)

As described above, according to an embodiment of the present invention, a terminal is provided. The terminal includes: a reception unit configured to receive, from a base station, information indicating whether a first waveform applied to a channel or a signal is enabled or disabled; and a control unit configured to apply the first waveform when receiving the channel or the signal from the base station in a case where the information indicates that the first waveform is enabled.

According to the above-described configuration, the terminal 20 can apply appropriate waveforms to the physical channel or signal depending on the communication environment. In other words, waveforms to be applied can be determined in the wireless communication system.

The reception unit may receive the information for each serving cell. According to the above-described configuration, the terminal 20 can apply appropriate waveforms to the physical channel or signal depending on the communication environment.

The reception unit may receive the information for each specific channel. According to the above-described configuration, the terminal 20 can apply appropriate waveforms to the physical channel or signal depending on the communication environment.

The reception unit may obtain information indicating which second waveform among the plurality of waveforms is to be used from system information, and the control unit may apply the second waveform when performing reception from the base station. According to the above-described configuration, the terminal 20 can apply appropriate waveforms to the physical channel or signal depending on the communication environment.

The control unit may determine the waveform to be applied to a specific channel or signal, based on the waveform applied to a certain channel or signal. According to the above-described configuration, the terminal 20 can apply appropriate waveforms to the physical channel or signal depending on the communication environment.

In addition, according to an embodiment of the present invention, a communication method performed by a terminal is provided. The communication method includes: receiving, from a base station, information indicating whether a first waveform applied to a channel or a signal is enabled or disabled; and applying the first waveform when receiving the channel or the signal from the base station in a case where the information indicates that the first waveform is enabled.

According to the above-described configuration, the terminal 20 can apply appropriate waveforms to the physical channel or signal depending on the communication environment. In other words, waveforms to be applied can be determined in the wireless communication system.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described related to an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may each be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, the information indication may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block)), other signals, or combinations thereof. Also, RRC signaling may be referred to as an "RRC message," and can be, for example, an RRC connection setup message, an RRC connection reconfiguration message, and so on.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, or a next generation system enhanced therefrom. In addition, a plurality of systems may be combined (for example, a combination of: at least one of LTE or LTE-A; and 5G, and the like) to be applied.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in the present disclosure may be implemented by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because various channels (e.g., PUCCH, PDCCH, or the like) and information elements may be identified by any suitable names, the various names assigned to these various channels and information elements are not used as limitations.

In the present disclosure, the terms "Base Station (BS)", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include, but are not limited to, a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone (registered trademark), a multicopter, a quadcopter, a balloon, and an object mounted on any of these. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure in which communications between a base station and a user terminal is replaced with communications between a plurality of terminals 20 (for example, which may be referred to as Device-to-Device (D2D), Vehicle-to-Everything (V2X), and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompasses a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) that does not depend on the numerology.

Numerology may be a communication parameter applied to at least one of transmission or reception of a certain signal or channel. The numerology may indicate at least one of, for example, subcarrier spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain (OFDM (Orthogonal Frequency Division Multiplexing) symbols, SC-FDMA (Single Carrier Frequency Division Multiple Access) symbols, and the like). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as PDSCH (or PUSCH) mapping type A. A PDSCH (or PUSCH) transmitted using a mini-slot may be referred to as PDSCH (or PUSCH) mapping type B.

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI," a plurality of consecutive subframes may be referred to as a "TTI," or one slot or one mini-slot may be referred to as a "TTI." In other words, at least one of a subframe or a TTI may be a subframe (1 ms) in the conventional LTE, may be a period shorter than 1 ms (for example, 1 to 13 symbols), or may be a period longer than 1 ms. It is to be noted that the unit representing TTI may be referred to as a slot, a mini-slot, or the like, instead of a subframe.

Here, a TTI refers to the minimum time unit of scheduling in radio communication, for example. For example, in LTE systems, a base station performs, for each terminal 20, scheduling of allocating radio resources (such as a frequency bandwidth and transmission power that can be used by each terminal 20) in TTI units. It is to be noted that the definition of the TTI is not limited to the above-described definition.

The TTI may be a transmission time unit for channel-encoded data packets (transport blocks), code blocks, codewords, or the like, or may be a unit of processing in scheduling, link adaptation, or the like. It is to be noted that, when a TTI is provided, a time period (for example, the number of symbols) to which transport blocks, code blocks, codewords, or the like are actually mapped may be shorter than the TTI.

It is to be noted that, in a case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a normal TTI (TTI in LTE Rel. 8 to Rel. 12), a long TTI, a normal subframe, a long subframe, a slot, or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

It is to be noted that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and having a TTI length equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of the numerology, and may be 12, for example. The number of subcarriers included in an RB may be determined based on the numerology.

In addition, an RB may include one or a plurality of symbols in the time domain, and may have a length of one slot, one mini-slot, one subframe, or one TTI. One TTI, one subframe, and the like, may each be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (Res). For example, one RE may correspond to a radio resource area including one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be identified by an RB index based on the common reference point of the carrier. PRBs may be defined by a certain BWP and may be numbered in the BWP.

A BWP may include a BWP for UL (UL BWP) and a BWP for DL (DL BWP). One or a plurality of BWPs may be configured in one carrier for UE.

At least one of configured BWPs may be active, and the UE is not required to expect to transmit/receive a certain signal/channel outside the active BWP. It is to be noted that that a "cell", a "carrier", or the like, in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Memory
1003 Storage
1004 Communication apparatus
1005 Input apparatus
1006 Output apparatus

## Claims

1. A terminal comprising:
a reception unit configured to receive, from a base station, information indicating whether a first waveform applied to a channel or signal is enabled or disabled; and
a control unit configured to apply the first waveform when receiving the channel or the signal from the base station, in a case where the information indicates that the first waveform is enabled.

2. The terminal as claimed in claim 1, wherein
the reception unit receives the information for each serving cell.

3. The terminal as claimed in claim 1, wherein
the reception unit receives the information for each specific channel.

4. The terminal as claimed in claim 1, wherein
the reception unit obtains information indicating which second waveform among the plurality of waveforms is to be used from system information, and
the control unit applies the second waveform when performing reception from the base station.

5. The terminal as claimed in claim 1, wherein
the control unit determines the waveform to be applied to a specific channel or signal, based on the waveform applied to a certain channel or signal.

6. A communication method performed by a terminal, the communication method comprising:
receiving, from a base station, information indicating whether a first waveform applied to a channel or signal is enabled or disabled; and
applying the first waveform when receiving the channel or the signal from the base station, in a case where the information indicates that the first waveform is enabled.
